# EUROPEAN PATENT SPECIFICATION

(11) **EP 2 247 836 B1**
(45) Date of publication and mention of the grant of the patent: **14.06.2017**
(21) Application number: 09715602.0
(22) Date of filing: 13.02.2009
(51) Int. Cl.: F01P 5/04

(54) **VARIABLE SPEED FAN DRIVE**
VARIABLER VENTILATORANTRIEB
SYSTÈME D'ENTRAÎNEMENT DE VENTILATEUR À VITESSE VARIABLE

(30) Priority: 26.02.2008 GB 0803398
(43) Date of publication of application: 10.11.2010
(73) Proprietor: Agco SA, 60026 Beauvais (FR)
(72) Inventor: HUSSON, Geoffroy, F-54134 Ceintrey (FR)
(74) Representative: Morrall, Roger
(86) International application number: PCT/EP2009/051696
(87) International publication number: WO 2009/106434

(56) References cited:
- EP-A1- 0 826 892
- DE-A1- 4 041 568

## Description

The invention relates to a fan drive for a cooling fan on a vehicle which drives a fan at a variable ratio with respect to an input drive.
Vehicles which have an internal combustion engine, for example a tractor, typically require a fan which serves to cool the water in a radiator which, in turn, cools the engine. The demand for cooling can vary depending on the ambient temperature, the work rate of the engine and any auxiliary demands such as cab air conditioning requirements.
Known fan drives include those which have a fixed connection between the fan and an engine output delivering a fixed ratio. The power consumption of the fan is proportional to the cubic speed of the rotation thereof. Therefore, the fan is often driven at an insufficient speed resulting in overheating, or at an excessive speed resulting in excessive power consumption. This presents a very inefficient system.
More recently, schemes to provide variable speed fan drives have been introduced. One route is to provide a vicostatic coupler between the engine output and the fan. The coupler delivers a percentage slippage which reduces the relative speed of the fan.
In another arrangement, a Vistronic coupler is used which, again, delivers a percentage slippage but is dependent upon the temperature around the coupler. This can be controlled by electronics but the slippage approach still has a high degree of inefficiency.
EP-0,826,892 discloses a dual ratio viscous drive for a fan which includes a planetary gear set. The output of the planetary gear set is the ring gear which is connected to the output of a viscous coupling and the fan. An input shaft is connected to a planet carrier and the input of the viscous coupling. The dual ratio is achieved by selectively grounding the sun gear. US-2006/0070588 discloses a variable speed fan drive which utilizes a hydraulic actuator to actuate a variable sheath assembly. The variable sheath assembly drives a sheath assembly by way of a V-belt. Therefore the driving to driven ratio can be varied.

Although the variable pulley arrangement increases the efficiency of the fan drive, there is still a desire to provide extra functionality. For example, a radiator grille associated with a fan of a known type is particularly difficult to clean.

Therefore, it is an object of the invention to provide an improved variable speed fan drive. It is a further object of the invention to provide a variable speed fan drive which facilitates easy cleaning of an associated radiator grille.

In accordance with the present invention there is provided a variable speed fan drive for a vehicle, comprising an input shaft driven by an engine, the input shaft arranged to drive a plurality of planetary gears which mesh with a sun gear in an epicyclic gear arrangement, the sun gear being connected by a shaft to a fan, wherein the input shaft is also arranged to drive a further gear arrangement by a variable ratio, the further gear arrangement having an output which is connected to a housing of the epicyclic gear arrangement, the housing being meshed with the planetary gears. By providing an epicyclic gear arrangement in this manner the range of ratios at which the fan can be driven with respect to the engine output is greatly increased over known fan drives. This not only gives the system greater flexibility for optimising the fan speed to demand, but allows the fan to be driven in reverse.

Such reversing advantageously allows a simple method of removing dust and particulates from a radiator grille adjacent to the fan. This reduces the frequency at which an operator must wash the radiator with fluid such as water or compressed air from a hose, thereby saving time.

In one embodiment the further gear arrangement comprises a first pulley on the input shaft connected by a belt to a second pulley which drives a gear meshed with the epicyclic gear housing via an intermediate gear. Preferably the belt is a V-belt and at least one of the first and second pulleys has a diameter which can be varied to change the ratio.

In a second embodiment the further gear arrangement comprises a hydrostatic transmission.

In a third embodiment the further gear arrangement comprises an input driven by the input shaft, and an output, wherein the ratio is varied by creating a slippage between the input and the output.

The variable ratio may be within the range of 0.5 to 2.0. The ratio of fan speed to engine speed may vary in the range of -1 to 2.

Further advantages will become apparent from reading the following description of specific embodiments of the invention with reference to the drawings in which:-
- Figure 1: is a schematic diagram of a variable speed fan drive in accordance with one embodiment of the invention;
- Figure 2: is a schematic view of the meshed gears associated with the epicyclic gear arrangement of the fan drive of Figure 1 viewed from direction A, and,
- Figure 3: is a plot showing a comparison of the fan speed in response to a varied ratio delivered by the further gear arrangement.

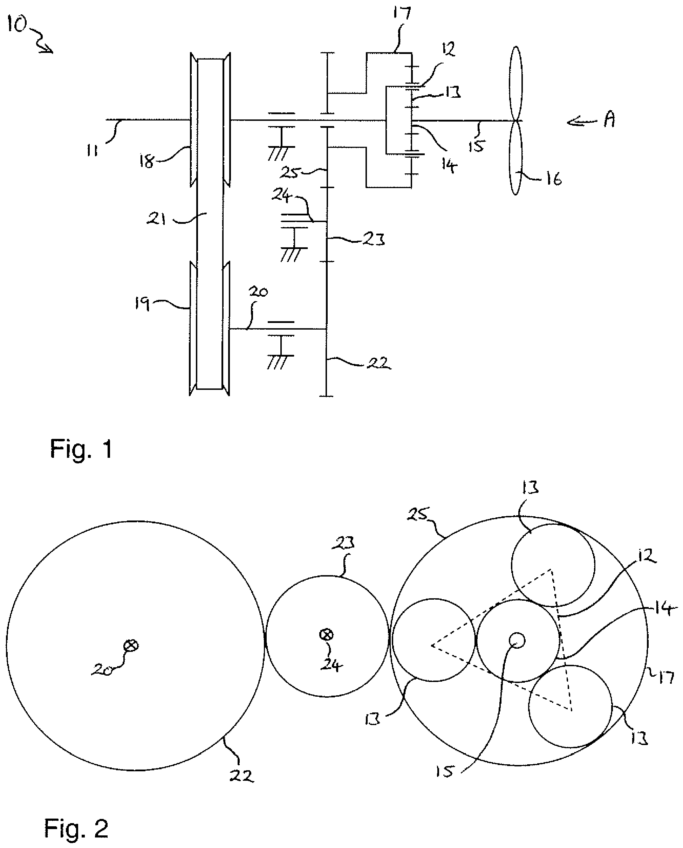

Referring to Figures 1 and 2, a variable speed fan drive 10 comprises an input shaft 11 driven by the output of an engine (not shown). The input shaft 11 is connected to a carrier 12 for three planetary gears 13. As can be seen in diagrammatic form in Fig. 2, the carrier 12 maintains the fixed relationship between the planetary gears 13 as they rotate around a sun gear 14, with which they are meshed.

An output shaft 15 is connected to a fan 16. The sun gear 14 is also disposed on the output shaft, and when driven by movement of the meshed epicyclic gears 13, causes the fan 16 to rotate at a driven speed.

The epicyclic gear arrangement further comprises a housing 17 which surrounds, and meshes with, the planetary gears 13. This will be described in more detail later.

A pulley 18 having a variable diameter is located on the input shaft 11 between the epicyclic gear arrangement and the engine. A second pulley 19 is located on a further shaft 20 and is coupled to the variable diameter pulley 18 by a V-belt 21. The pulley 19 is driven by the variable diameter pulley 18 at a ratio which is dependent upon the diameter of the pulley 18 which is selected by the control system.

The effective driving diameter of the pulley 18 can be varied using hydraulic or electrical actuation means to vary the dimension of an internal sheath upon which the V-belt acts. For example, a hydraulic actuator, such as a 2-way ram, can be arranged to actuate a variable sheath assembly in a similar manner to that described in US-2006/0070588. Alternatively, an electric motor can be employed to actuate the variable sheath.

A gear 22 is located also on the further shaft 20 and therefore rotates at the same speed as the second pulley 19. An intermediate gear 23 is located on an intermediate shaft 24 and is meshed between gear 22 and an external gearing 25 on the epicyclic housing 17, thereby forming a gear train. Therefore, the housing 17 is driven by means of the input shaft 11, first and second pulleys 18, 19 and gears 22, 23, 25.

Operation of the variable speed fan drive 10 will now be described with reference to Figures 1, 2 and 3. For the purpose of simple explanation, the input shaft is driven at a steady speed of 600rpm corresponding to an idling engine in this example.

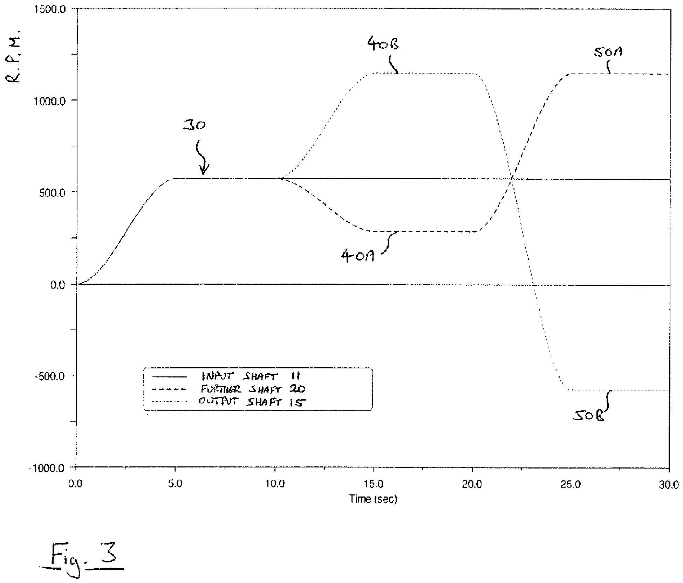

The output to input ratio of the variator pulley arrangement 18, 19, 21 can be varied, for example, within a range of 0.5 to 2.0. In a first case, when the ratio is set to 1.0 the epicyclic housing 17 is driven to rotate at the same rotational speed as the planetary carrier 12. From Figure 2, it can be seen that there is zero relative movement between the planetary gears 13, the housing 17, and the sun gear 14. Therefore, the rotational speed of the output shaft 15 (and the fan 16) is the same as the input shaft 11, as represented by region 30 in Figure 3.

In a second case, the ratio of the variator pulley arrangement 18,19,21 is reduced to 0.5 causing the rotational speed of the further shaft 20, and thus the epicyclic housing 17, to fall to 300rpm, as represented by region 40A in Figure 3. This creates a relative movement between the planetary gears 13 and the housing 17 as the housing 17 is caused to rotate slower. The planetary gears 13 orbit within the housing 17 in a relative clockwise direction (Fig. 2) resulting is an anti-clockwise motion of each planetary gear 13 on their respective shafts. This has the effect of increasing the absolute (clockwise) rotational speed of the sun gear 14 and thus the output shaft 15. This is represented by region 40B in Figure 3. The resulting output speed of the fan 16 is 1200rpm, twice that of the engine speed.

In a third case, the ratio of the variator 18,19,21 is increased to 2.0 so that the rotational speed of the further shaft 20, and thus the epicyclic housing 17 is twice the speed of the engine. This is represented by region 50A in Figure 3. The housing 17 rotates clockwise at the faster speed than the meshed planetary gears 13. This creates a relative anticlockwise orbiting motion of the planetary gears 13 within the housing 17 causing the clockwise speed of the sun gear 14 to be reduced to an extent that it has an absolute rotational movement in an anticlockwise direction. This results in a reverse action of the fan 16, represented by region 50B in Figure 3.

Such reversal of the fan 16 serves to provide a cleaning mode which removes dust and particulates from a radiator grille (not shown) located next to the fan. The cleaning mode can be activated automatically or by selection by the operator. For example, automatic activation may occur when the temperature of the water in the radiator exceeds a predetermined threshold for a predetermined period of time, indicating a potential blockage in the radiator grille.

The invention also increases the range of engine speed to fan speed ratios available. For example, with reference to the embodiment described, without the epicyclic gear arrangement in place and a direct drive from pulley 19 to the fan 16, the available range of ratios would be 0.5 to 2.0. However, the incorporation of the epicyclic gear arrangement in accordance with the invention increases this range to -1 to 2.0. This is particularly advantageous when relatively low fan speeds are required.

The pulley arrangement 18,19,21 shown in Figure 1 provides an efficient mechanism to vary the drive ratio of the fan and delivers the advantages described in US-2006/0070588.

However, it is envisaged that, instead, other mechanisms can be used to provide a variable ratio without deviating from the scope of the invention. For example, a hydrostatic transmission can be employed. In this case, a hydraulic pump is driven by the input shaft 11. The output of the pump drives a motor which, in turn, drives the motion of the epicyclic housing 17 via a gear train for example.

It will be appreciated that a hydrostatic transmission is capable of delivering a wider range of ratios than the pulley-based variator, including a reverse ratio. However, in order to maintain the advantages provided by the invention, a hydrostatic transmission should be employed in conjunction with the epicyclic gear arrangement.

Further alternative arrangements that deliver a variable ratio include vicostatic and vistronic mechanisms which create a percentage slippage between the input shaft 11 and the epicyclic housing 17.

In summary, there is provided a variable speed fan drive particularly suitable for a vehicle having an internal combustion engine. The fan drive comprises an input shaft driven by the output of an engine. The input drives a carrier for planetary gears which each orbit a sun gear in an epicyclic gear arrangement. A fan is coupled to the sun gear. A further gear arrangement, driven by the input shaft, delivers a variable output to input ratio, the output of which is coupled to a housing of the epicyclic gear arrangement which is meshed with the planetary gears. The provision of the epicyclic gear arrangement in combination with the variable ratio allows the fan blade to operate in reverse. Advantageously, this can be exploited to provide a means to clean a radiator grille.

## Claims

1. A variable speed fan drive (10) for a vehicle comprising an input shaft (11) driven by an engine, the input shaft arranged to drive a plurality of planetary gears (13) which mesh with a sun gear (14) in an epicyclic gear arrangement, wherein the input shaft is also arranged to drive a further gear arrangement (18,19,21) by a variable ratio, the further gear arrangement having an output which is connected to a housing (17) of the cpicyclic gear arrangement, the housing being meshed with the planetary gears, **characterised in that** the sun gear is connected by a shaft to a fan (16).

2. A variable speed fan drive according to Claim 1, wherein the further gear arrangement comprises a first pulley (18) on the input shaft connected by a belt (21) to a second pulley (19) which drives a gear (22) meshed with the housing via an intermediate gear (23).

3. A variable speed fan drive according to Claim 2, wherein the belt is a V-belt and at least one of the first and second pulleys has a driving diameter which can be varied to change the ratio.

4. A variable speed fan drive according to Claim 1, wherein the further gear arrangement comprises a hydrostatic transmission which includes a hydraulic pump.

5. A variable speed fan drive according to Claim 1, wherein the further gear arrangement comprises an input driven by the input shaft, and an output, wherein the ratio is varied by creating a slippage between the input and the output.

6. A variable speed fan drive according to any preceding claim, wherein the variable ratio is in the range of 0.5 to 2.0.

7. A variable speed fan drive according to any preceding claim, wherein the ratio of fan speed to engine speed can vary in the range of -1 to 2.

8. A variable speed fan drive according to any preceding claim, wherein the plurality of planetary gears consists of three planetary gears.

## Patentansprüche

1. Geschwindigkeitsvariabler Lüfterantrieb (10) für ein Fahrzeug mit einer durch einen Motor angetriebenen Eingangswelle (11), wobei die Eingangswelle zum Antreiben einer Mehrzahl von mit einem Sonnenrad (14) in einer epizyklischen Getriebeanordnung verzahnten Planetenrädern (13) angeordnet ist, wobei die Eingangswelle auch zum Antreiben einer weiteren Getriebeanordnung (18, 19, 21) mit einem variablen Übersetzungsverhältnis angeordnet ist, wobei die weitere Getriebeanordnung einen mit einem Gehäuse (17) der epizyklischen Getriebeanordnung verbundenen Ausgang aufweist, wobei das Gehäuse mit den Planetenrädern verzahnt ist, **dadurch gekennzeichnet, dass** das Sonnenrad durch eine Welle mit einem Lüfter (16) verbunden ist.

2. Geschwindigkeitsvariabler Lüfterantrieb nach Anspruch 1, wobei die weitere Getriebeanordnung auf der Eingangswelle eine erste Scheibe (18) aufweist, die durch einen Riemen (21) mit einer zweiten Scheibe (19) verbunden ist, die ein mit dem Gehäuse über ein Zwischenzahnrad (23) verbundenes Zahnrad (22) antreibt.

3. Geschwindigkeitsvariabler Lüfterantrieb nach Anspruch 2, wobei der Riemen ein Keilriemen ist und mindestens eine Scheibe der ersten und der zweiten Scheibe einen Antriebsdurchmesser aufweist, der zum Verändern des Übersetzungsverhältnisses variierbar ist.

4. Geschwindigkeitsvariabler Lüfterantrieb nach Anspruch 1, wobei die weitere Getriebeanordnung ein hydrostatisches Getriebe mit einer Hydraulikpumpe aufweist.

5. Geschwindigkeitsvariabler Lüfterantrieb nach Anspruch 1, wobei die weitere Getriebeanordnung einen von der Eingangswelle angetriebenen Eingang und einen Ausgang aufweist, wobei das Übersetzungsverhältnis durch das Erzeugen von Schlupf zwischen dem Eingang und dem Ausgang variiert wird.

6. Geschwindigkeitsvariabler Lüfterantrieb nach einem der vorangehenden Ansprüche, wobei das variable Übersetzungsverhältnis im Bereich zwischen 0,5 bis 2,0 liegt.

7. Geschwindigkeitsvariabler Lüfterantrieb nach einem der vorangehenden Ansprüche, wobei das Verhältnis der Lüftergeschwindigkeit zu der Motorgeschwindigkeit im Bereich zwischen -1 bis 2 variieren kann.

8. Geschwindigkeitsvariabler Lüfterantrieb nach einem der vorangehenden Ansprüche, wobei die Mehrzahl der Planetenräder aus drei Planetenrädern besteht.

## Revendications

1. Dispositif de commande de ventilateur à vitesse variable (10) pour un véhicule comprenant un arbre d'entrée (11) entraîné par un moteur, l'arbre d'entrée étant agencé de manière à entraîner une pluralité d'engrenages planétaires (13) qui engrènent sur une roue solaire (14) suivant un agencement d'engrenage épicycloïdal, dans lequel l'arbre d'entrée est aussi agencé de manière à entraîner un autre agencement d'engrenage (18,19, 21) avec un rapport variable, l'autre agencement d'engrenage comportant une sortie qui est couplée à un boîtier (17) de l'agencement d'engrenage épicycloïdal, le boîtier étant couplé aux engrenages planétaires, **caractérisé en ce que** la roue solaire est couplée par un arbre à un ventilateur (16).

2. Dispositif de commande de ventilateur à vitesse variable selon la revendication 1, dans lequel l'autre agencement d'engrenage comprend une première poulie (18) sur l'arbre d'entrée, reliée par une courroie (21) à une seconde poulie (19) qui entraîne un engrenage (22) couplé au boîtier au moyen d'un engrenage intermédiaire (23).

3. Dispositif de commande de ventilateur à vitesse variable selon la revendication 2, dans lequel la courroie est une courroie en V et au moins l'une des première et seconde poulies présente un diamètre d'entraînement qui peut être modifié afin de changer le rapport.

4. Dispositif de commande de ventilateur à vitesse variable selon la revendication 1, dans lequel l'autre agencement d'engrenage comprend une transmission hydrostatique qui comporte une pompe hydraulique.

5. Dispositif de commande de ventilateur à vitesse variable selon la revendication 1, dans lequel l'autre agencement d'engrenage comprend une entrée entraînée par l'arbre d'entrée et une sortie, dans lequel le rapport est modifié en créant un glissement entre l'entrée et la sortie.

6. Dispositif de commande de ventilateur à vitesse variable selon l'une quelconque des revendications précédentes, dans lequel le rapport variable est compris dans la plage de 0,5 à 2,0.

7. Dispositif de commande de ventilateur à vitesse variable selon l'une quelconque des revendications précédentes, dans lequel le rapport de la vitesse de ventilateur sur la vitesse de moteur peut varier dans la plage de -1 à 2.

8. Dispositif de commande de ventilateur à vitesse variable selon l'une quelconque des revendications précédentes, dans lequel la pluralité d'engrenages planétaires consiste en trois engrenages planétaires.
